Europäisches Patentamt

European Patent Office

Office européen des brevets

(19)

(11) Veröffentlichungsnummer: **0 031 395**
A2

# (12) EUROPÄISCHE PATENTANMELDUNG

(21) Anmeldenummer: 80100667.7

(22) Anmeldetag: 09.02.80

(51) Int. Cl.³: **C 02 F 1/52**, C 02 F 5/00

(30) Priorität: 08.01.80 CH 87/80

(43) Veröffentlichungstag der Anmeldung: 08.07.81
Patentblatt 81/27

(84) Benannte Vertragsstaaten: **AT BE CH DE FR GB IT LU NL SE**

(71) Anmelder: **GEBRÜDER SULZER AKTIENGESELLSCHAFT**, Zürcherstrasse 9, CH-8401 Winterthur (CH)

(72) Erfinder: **Ginocchio, Julio, Rohrhaldenstrasse 35, CH-8712 Stäfa (CH)**
Erfinder: **Tylmann, Josef, Brunngasse, CH-8400 Winterthur (CH)**
Erfinder: **Antoine, Louis, 96, Avenue de Bourg la Reine, F-92220 Bagneux (FR)**

(74) Vertreter: **Dipl.-Ing. H. Marsch Dipl.-Ing. K. Sparing Dipl.-Phys.Dr. W.H. Röhl, Lindemannstrasse 31, D-4000 Düsseldorf (DE)**

(54) **Verfahren zur Herstellung und Reinigung von mindestens annähernd gesättigten Kalklösungen und Kalksättiger zur Durchführung des Verfahrens.**

(57) In einem Kalksättiger wird die gesättigte Kalklösung, das sogenannte Kalkwasser, durch einen Schrägklärer (20) geführt, in dem eine beschleunigte Sedimentation der enthaltenen Verunreinigungen und der entstandenen Kalziumkarbonate erreicht wird. Damit kann die Leistung bisheriger Kalksättiger mindestens verdoppelt bis vervierfacht werden, so dass bei gleichen Anforderungen die Einrichtungen erheblich kleiner gebaut werden können.

EP 0 031 395 A2

0031395

Gebrüder Sulzer, Aktiengesellschaft, Winterthur/Schweiz

---

Verfahren zur Herstellung und Reinigung von mindestens annähernd gesättigten Kalklösungen und Kalksättiger zur Durchführung des Verfahrens

---

Die Erfindung betrifft ein Verfahren zur Herstellung und Reinigung von mindestens annähernd gesättigten, wässrigen Kalklösungen, sogenanntem Kalk-Wasser, für die Entkarbonisierung und/oder Neutralisation von Wasser, wobei Kalk mit Wasser gemischt und Verunreinigungen und entstehende Kalziumkarbonate in zwei Stufen aus der Mischung entfernt werden. Weiterhin bezieht sich die Erfindung auf einen Kalksättiger für die Durchführung des Verfahrens mit einem Rührwerk, mindestens einem Sedimentationsraum und mit einem Ueberlauf für die gereinigte Kalklösung, sowie mit einem Schlammabzug.

Zur Neutralisation saurer Wässer und/oder zur Einstellung eines bestimmten pH-Wertes werden in der Wassertechnik alkalisierende Stoffe eingesetzt. Bevorzugt gelangen dabei ungelöschter Kalk (Kalziumoxid CaO) oder gelöschter Kalk (Kalziumhydroxid $Ca(OH)_2$) zur Anwendung, weil Kalk praktisch überall zur Verfügung steht. Kalk weist eine niedrige Wasserlöslichkeit auf; man geht daher im allgemeinen so vor, dass in einem ersten Behälter zunächst eine Kalksuspension in Wasser, die sogenannte Kalkmilch, hergestellt und in einen Kalksättiger eingespeist wird, in dem sie mit Wasser zu einer gesättigten, echten Lösung verdünnt wird ("Mémento technique de l'eau", 8. Edition (1978), Seite 553-555, herausgegeben von der Firma Degrémont).

Bei der Kalkmilch-Herstellung werden bereits grobe Verunreinigungen, die aus dem Wasser oder dem Kalk stammen können, und auch bereits entstandene Kalziumkarbonate durch Sedimentation von der Suspension getrennt. Die wesentliche Reinigung der auch Kalkwasser genannten Kalklösung findet jedoch in dem Kalksättiger statt. Vor allem wegen langsamer Sedimentationsgeschwindigkeiten in den bisherigen Kalksättigern werden dabei nur relativ geringe Leistungen in der Kalkwasser-Bereitung erreicht. Bei mit Rührwerk ausgestatteten Kalksättigern bekannter Bauart kann man beispielsweise einen Kalziumhydroxid-Eintrag von etwa 3 - 4 kg/h · m$^2$ erreichen. Bei grossen Anlagen erfordern derartig geringe Leistungen relativ voluminöse und platzraubende Einrichtungen.

Aufgabe der Erfindung ist es, das bekannte Verfahren und die dafür notwendigen Kalksättiger so zu verbessern, dass erhöhte Leistungen und eine bessere Qualität bei der Kalkwasser-Herstellung erreicht werden, um auf diese Weise eine Verkleinerung der dafür notwendigen Einrichtungen und somit eine Senkung des Investitions- und Platzbedarfs zu erreichen.

Die Lösung dieser Aufgabe erfolgt erfindungsgemäss dadurch, dass die Kalklösung in der zweiten Verfahrensstufe durch einen Schrägklärer geführt wird; durch die Verwendung eines Schrägklärers, der in einer der bekannten und handelsüblichen Ausführungsformen verwendet werden kann, lassen sich die angegebenen Leistungen mindestens etwa verdoppeln bis vervierfachen. Für die Durchführung des Verfahrens ist der eingangs erwähnte Kalksättiger gekennzeichnet durch zwei beckenartige Räume, zwischen denen mindestens eine gemeinsame Wand vorgesehen ist, in der eine Durchtrittsöffnung für eine Strömungsverbindung zwischen beiden Räumen vorhanden ist, von denen der eine als Reaktionsraum das Rührwerk und der andere, als Sedimentationsraum wirkende, zwischen dem Ueberlauf für die gereinigte Kalklösung und der Durchtrittsöffnung einen Schrägklärer aufweisen, er ist ferner gekennzeichnet durch je einen Schlammabzug aus dem unteren Teil beider Räume.

In seinen Reaktionsraum können dabei sowohl wässrige Suspensionen von Kalk, also Kalziumhydroxid, als auch ungelöschter Kalk (Kalziumoxid) in Pulverform eingegeben werden. In diesem Fall dient der Reaktionsraum gleichzeitig der Kalklöschung; die dabei sich ergebende Temperaturerhöhung der Lösung beeinflusst als zusätzlicher Vorteil den Flockungsvorgang günstig.

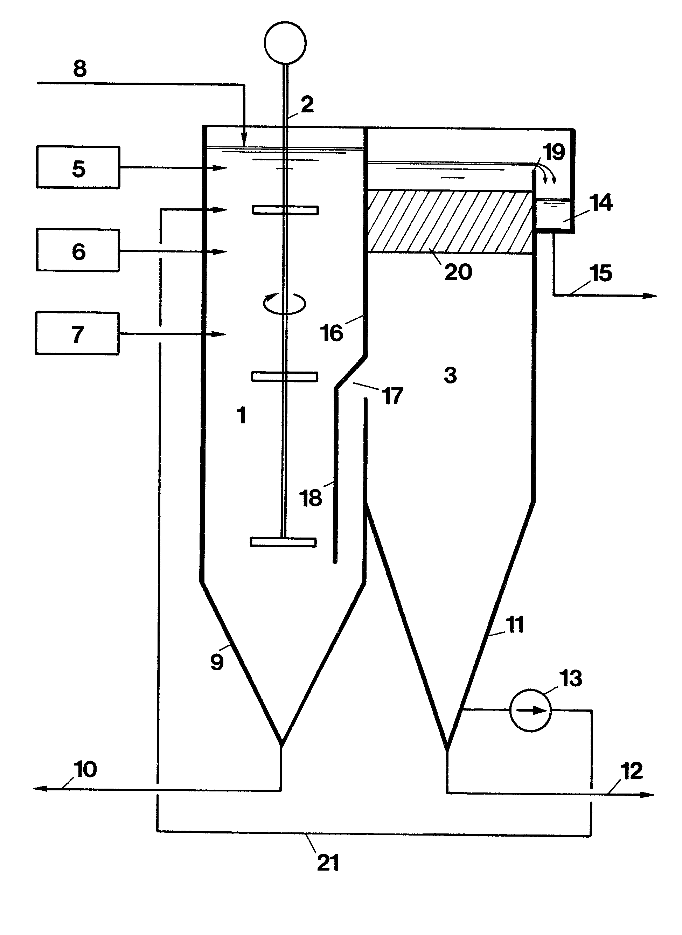

Ein Kalksättiger zur Durchführung des erfindungsgemässen Verfahrens wird nachstehend anhand eines Ausführungsbeispiels im Zusammenhang mit der Zeichnung näher erläutert; die einzige Figur zeigt schematisch einen Längsschnitt durch den Kalksättiger.

Der Kalksättiger besteht aus zwei Räumen 1 und 3, die mit Vorteil in einem einzigen Behälter zusammengefasst sind; der Raum 1 dient als Reaktionsraum und ist mit einem motorgetriebenen Rührwerk 2 ausgerüstet, während der nachgeschaltete Raum 3 den Sedimentationsraum bildet.

Die Räume 1 und 3 grenzen mit einer gemeinsamen Wand 16 aneinander, in der eine Durchtrittsöffnung 17 für das im Raum 1 hergestellte Kalkwasser vorgesehen ist. Gegen eine Kurzschluss-Strömung aus dem Raum 1 in den Raum 3 durch die etwa auf halber Höhe der Wand 16 befindliche Durchtrittsöffnung 17 hindurch ist eine, im vorliegenden Beispiel nach unten gezogene Trennwand 18 vorgesehen.

An ihren Unterseiten sind beide Räume 1 und 3 im vorliegenden Beispiel durch je einen Schlammabzug 9 und 11 abgeschlossen, in dem sich die aus der Flüssigkeit ausgeschiedenen Feststoffe sammeln; diese können über nur schematisch angedeutete Leitungen 10 und 12 aus dem Kalksättiger abgezogen werden.

An seiner Oberseite hat der Raum 3 eine Ueberlaufkante 19, über die das gereinigte Kalkwasser in eine Rinne 14 und weiter durch eine Leitung 15 abfliesst.

Erfindungsgemäss ist in den Raum 3 stromaufwärts von seiner Ueberlaufkante 19 ein Schrägklärer 20 bekannter Bauart eingesetzt; in diesem wird eine erheblich beschleunigte Sedimentation von Feststoffen aus der Kalklösung erreicht.

In konventionellen Dosieranlagen 5, 6, und 7 werden dem Reaktionsraum 1 ungelöschter Kalk (CaO) (Anlage 5) in Pulverform sowie evtl. Flockungsmittel (Anlage 6) und Flockungshilfsmittel (Anlage 7) zugeführt, während Wasser über eine Leitung 8 zufliesst. Das Mischen und der erforderliche Energieeintrag erfolgen durch das Rührwerk 2.

Schwere Verunreinigungen, wie beispielsweise Sand, aber auch ein Teil der bereits entstandenen Kalziumkarbonate sedimentieren bereits im Reaktionsraum 1, sammeln sich in dessen Schlammabzug . 9 und werden über die Leitung 10 abgeführt.

Leichtere Verunreinigungen des Kalkes, des Wassers und der Rest der sich bildenden Kalziumkarbonate agglomerieren, unterstützt durch die Flockungs- und die Flockungshilfsmittel, zu sedimentierbaren Partikeln während ihres Verweilens im und auf dem Weg vom Raum 1 durch die Durchtrittsöffnung 17 in den Raum 3 und während des Aufsteigens der mit ihnen beladenen Flüssigkeiten im Raum 3. Sie werden bei relativ hoher Oberflächenbelastung im Schrägklärer 20 abgeschieden.

Das schlammartige Sediment sammelt sich beim dargestellten Ausführungsbeispiel im Schlammabzug 11 des Sedimentationsraums 3 und wird über die Leitung 12 abgeführt. Gegebenenfalls kann nach Art eines Schlammkontaktverfahrens ein Teil des Sediments mit Hilfe einer Pumpe 13 über eine Leitung 21 in den Reaktionsraum 1 rezirkuliert werden.

Patentansprüche

1. Verfahren zur Herstellung und Reinigung von mindestens annähernd gesättigten, wässrigen Kalklösungen, sogenanntem Kalk-Wasser, für die Entkarbonisierung und/oder Neutralisation von Wasser, wobei Kalk mit Wasser gemischt und Verunreinigungen und entstehende Kalziumkarbonate in zwei Stufen aus der Mischung entfernt werden, dadurch gekennzeichnet, dass die Kalklösung in der zweiten Verfahrensstufe durch einen Schrägklärer (20) geführt wird.

2. Verfahren nach Anspruch 1, dadurch gekennzeichnet, dass die Koagulation der Verunreinigungen und/oder der Kalziumkarbonate durch die Zugabe von Flockungs- und/oder Flockungshilfsmittel in die erste Verfahrensstufe gefördert wird.

3. Verfahren nach Anspruch 1, dadurch gekennzeichnet, dass ein Teil des Sediments der zweiten Verfahrensstufe in die erste Verfahrensstufe zurückgeführt wird.

4. Kalksättiger zur Durchführung des Verfahrens mit einem Rührwerk, mindestens einem Sedimentationsraum und einem Schlammabzug, sowie mit einem Ueberlauf für die gereinigte Kalklösung, gekennzeichnet durch beckenartige Räume (1, 3), zwischen denen mindestens eine gemeinsame Wand (16) vorgesehen ist, in der eine Durchtrittsöffnung (17) für eine Strömungsverbindung zwischen beiden Räumen (1, 3) vorhanden ist, von denen der eine (1) als Reaktionsraum das Rührwerk (2) und der andere, als Sedimentationsraum wirkende, zwischen dem Ueberlauf (19) für die gereinigte Kalklösung und der Durchtrittsöffnung (17) einen Schrägklärer (20) aufweisen, und ferner gekennzeichnet durch je einen Schlammabzug (9, 11) im unteren Teil beider Räume (1, 3).

5. Kalksättiger nach Anspruch 4, dadurch gekennzeichnet, dass das Sediment aus dem Reaktionsraum (1) und/oder aus dem Sedimentationsraum (3) durch mechanische Einrichtungen geräumt wird.